# EUROPÄISCHE PATENTSCHRIFT

(11) **EP 1 610 010 B1**
(45) Veröffentlichungstag und Bekanntmachung des Hinweises auf die Patenterteilung: **03.02.2010**
(21) Anmeldenummer: 05012309.0
(22) Anmeldetag: 08.06.2005
(51) Int. Cl.: F16C 19/38, F16C 33/78, F16J 15/32, F16C 35/06

(54) **Dichtungseinheit für eine Nabendichtung**
Sealing unit for a hub seal
Dispositif d'étanchéité pour un joint de moyeu

(30) Priorität: 15.06.2004 DE 102004028863
(43) Veröffentlichungstag der Anmeldung: 28.12.2005
(60) Teilanmeldung: 09174852.5
(73) Patentinhaber: BPW Bergische Achsen KG, 51674 Wiehl (DE)
(72) Erfinder: Ebert, Jörg, 50858 Köln (DE); Schlimbach, Andreas, 53804 Much (DE); Leidig, Hans-Josef, 51580 Reichshof (DE)
(74) Vertreter: Christophersen, Ulrich Rudolf

(56) Entgegenhaltungen:
- EP-A- 0 909 663
- DE-C1- 4 128 508
- DE-C1- 19 956 838
- DE-U1- 29 613 405

## Beschreibung

Die Erfindung betrifft eine Dichtungseinheit für eine Nabendichtung mit den im Oberbegriff des Patentanspruchs 1 angegebenen Merkmalen.

Eine solche Dichtungseinheit ist zur Abdichtung der Naben-Wälzlagerung einer Lkw-Anhängerachse aus der Praxis bekannt und z. B. in dem Prospekt "Originalersatzteile SH" der Anmelderin BPW Bergische Achsen KG beschrieben. Ferner ist eine solche Dichtungseinheit in der DE 296 13 405 U1 beschrieben. Die abzudichtende Radnabe weist an ihrer Bohrung einen radialen Vorsprung in Gestalt eines dort in einer Umfangsnut eingesetzten Sicherungsringes auf. Wird die Radnabe von dem Achskörper axial heruntergezogen, nimmt dieser Vorsprung die innerhalb der Radnabe angeordnete Naben-Wälzlagerung mit. Als Mittel zur Übertragung der Abziehkräfte dient ein auf dem Achskörper angeordneter Ring, dessen Außenrand von dem Vorsprung der Radnabe erfasst wird, und dessen Innenrand sich gegen die Innenelemente der Naben-Wälzlagerung abstützt um diese von dem Achskörper herunter zu ziehen.

Der Erfindung liegt die **Aufgabe** zugrunde, eine für Radnaben-Konstruktionen, bei denen die Naben-Wälzlagerung zusammen mit der Radnabe abziehbar ist, in besonderer Weise geeignete Dichtungseinheit zu schaffen.

Zur **Lösung** dieser Aufgabe wird eine Dichtungseinheit für eine Nabendichtung mit den Merkmalen des Patentanspruchs 1 vorgeschlagen.

Bei dieser Dichtungseinheit für eine Nabendichtung dient der vorzugsweise starr ausgebildete weitere Ring als Kraftübertragungsmittel, wenn die Naben-Wälzlagerung zusammen mit der Radnabe axial von dem Achskörper abgezogen wird. Zur Übertragung der axialen Abziehkräfte dient aber nicht nur der weitere Ring, sondern ebenso der Dichtring. Dieser ist zweigeteilt mit einem außen auf dem Achskörper abgestützten Innenring und einem in der Bohrung der Radnabe abgestützten und mit dieser umlaufenden Außenring. Die Anordnung ist dergestalt, dass der Dichtring gegen die Außenseite des nabeneinwärts angeordneten weiteren Ringes abstützbar ist. Da ferner der Außendurchmesser des Dichtrings größer ist als der Innendurchmesser des Vorsprungs an der Radnabe, dienen sowohl der Dichtring wie auch der weitere Ring als Kraftübertragungselemente beim Abziehen der Radnabe. Die Abziehkräfte werden von der Radnabe zunächst auf den Dichtring, und von diesem weiter auf den weiteren Ring übertragen, der sich seinerseits axial gegen die Innenelemente der Naben-Wälzlagerung abstützt. Durch Ziehen an der Radnabe wird daher nicht nur diese, sondern zugleich auch die Naben-Wälzlagerung von dem Achskörper heruntergezogen. Der Dichtring übernimmt hierbei eine Doppelfunktion einerseits der Abdichtung der Radnabe und andererseits der beschriebenen Übertragung der Abziehkräfte.

Mit einer Ausgestaltung wird vorgeschlagen, dass der Dichtring mit einem sich in Achsrichtung erstreckenden Schenkel gegen den weiteren Ring abstützbar ist. Vorzugsweise ist der Dichtring mit dem Stirnseitenrand des Schenkels gegen den weiteren Ring abstützbar.

Mit einer weiteren Ausgestaltung der Nabendichtung wird vorgeschlagen, dass Innenring und weiterer Ring zueinander verriegelt sind. Vorzugsweise wird die Drehverriegelung dergestalt realisiert, dass der gegen den weiteren Ring abstützbare Schenkel des Dichtrings ein oder mehrere partielle Verlängerungen aufweist, welche durch korrespondierende Öffnungen des weiteren Ringes hindurchgreifen.

Zur Realisierung nicht nur einer Drehverriegelung, sondern eines vollständigen Formschlusses auch in Axialrichtung wird ferner vorgeschlagen, dass die beiden partiellen Verlängerungen an ihren Enden derart verformbar sind, dass der weitere Ring in Zugrichtung gegen den Dichtring gesperrt ist.

Der weitere Ring ist vorzugsweise als flache Scheibe gestaltet, deren Außenrand einen geringen radialen Abstand zur Bohrung der Radnabe aufweist. Über diesen radialen Abstand kann das in der Radnabe befindliche Lagerfett nur erschwert überströmen. Denn der weiter Ring bildet in Bezug auf die erste Hauptdichtfläche eine Art Labyrinth, wodurch die Schleifdichtung insgesamt entlastet wird.

Weitere Vorteile und Einzelheiten werden nachfolgend anhand eines auf der Zeichnung dargestellten Ausführungsbeispieles erläutert. Auf der Zeichnung zeigen:
- Fig. 1: einen perspektivischen Teilschnitt durch eine Radlagerung mit einer Radnabe, die über Elemente einer Wälzlagerung auf einem drehfesten Achskörper gelagert ist und
- Fig. 2: eine deutliche größere und wiederum perspektivische Darstellung der in Fig. 1 mit "II" bezeichneten Einzelheit, unter besonderer Berücksichtigung einer in der Radlagerung eingesetzten Nabendichtung.

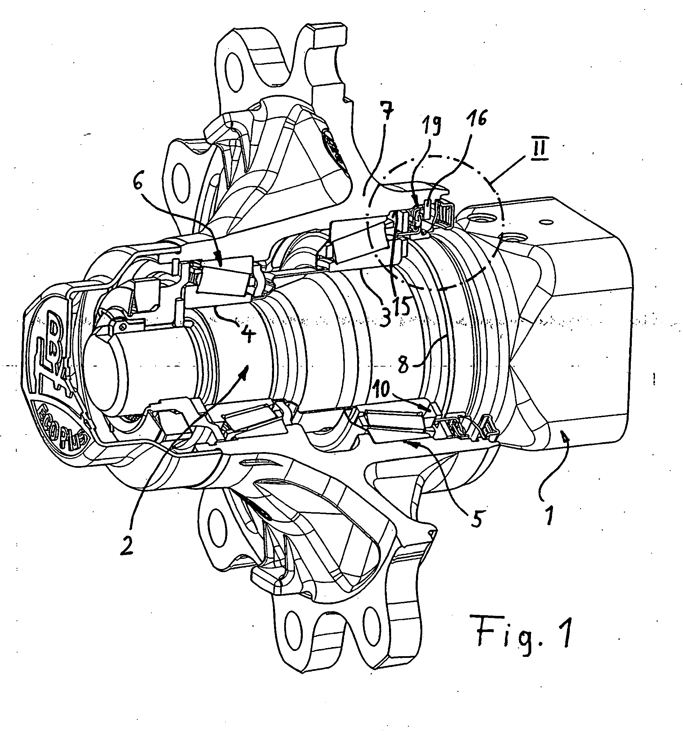

Fig. 1 zeigt, zentral angeordnet, einen Achskörper 1, dessen äußeres Ende als sich verjüngender Achsschenkel 2 gestaltet ist. Auf dem Achskörper bzw. Achsschenkel sind im Abstand voneinander angeordnete Lagersitze 3, 4 für ein inneres Wälzlager 5 und ein äußeres Wälzlager 6 der Naben-Wälzlagerung ausgebildet. Auf den beiden Wälzlagern 5, 6 ist eine beim Ausführungsbeispiel einteilig ausgebildete Radnabe 7 frei drehbar gelagert. Am äußeren Umfang der Radnabe 7 können auf einer Seite eine Bremstrommel oder Bremsscheibe, und auf der gegenüberliegenden Seite das Fahrzeugrad mittels Radbolzen befestigt werden. Eine solche Radlagerung findet vor allem bei nicht-angetriebenen Fahrzeugachsen Verwendung, z. B. mitlaufenden Achsen von Lkw-Anhängern.

Der Achskörper 1 weist einwärts des inneren Wälzlagers 5 eine Stufe 8 auf. Gegen die Stufe 8 stützt sich der Innenring des inneren Wälzlagers 5 ab, und zwar unter axialer Zwischenlage eines als flache Scheibe gestalteten Rings 10. Der Ring 10 ist daher wegen seiner Abstützung gegen den Achskörper 1 feststehend ausgebildet, sein Außenrand 11 weist hierbei einen geringen radialen Abstand gegenüber der sich drehenden Radnabe 7 auf. Durch diesen radialen Abstand kann das Lagerfett nur erschwert hindurchtreten.

In Längsrichtung etwas weiter einwärts ist in der Bohrung 15 der Radnabe 7 eine umlaufende Nut ausgebildet, in die ein Sicherungsring 16 einsetzbar ist. Der Sicherungsring 16 bildet auf diese Weise einen radialen Vorsprung an der Innenseite der Radnabe, mit dessen Hilfe sich die Radnabe mit Lagerung komplett von dem Achsschenkel 2 des Achskörpers 1 herunterziehen läßt, was im folgenden noch im einzelnen beschrieben werden wird.

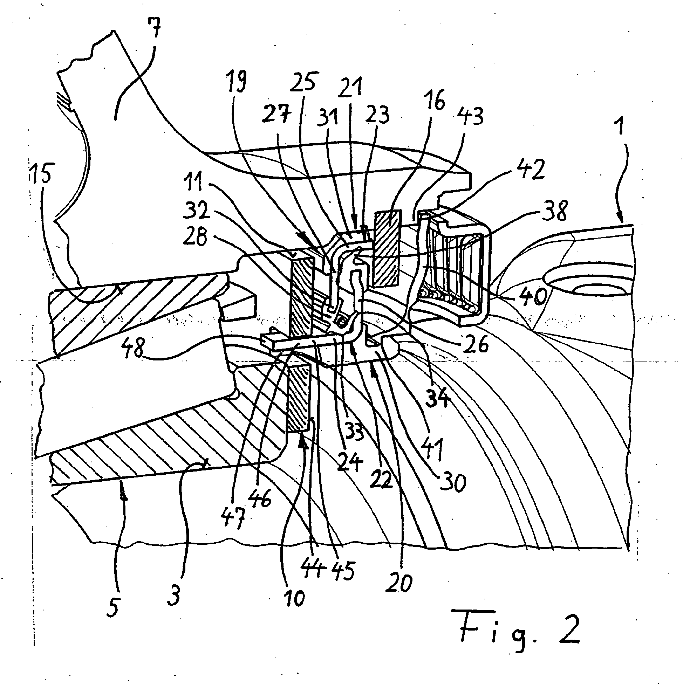

Nach innen, d. h. zur Fahrzeugmitte hin, ist die beschriebene Naben-Wälzlagerung durch eine Nabendichtung abgedichtet, deren Einzelheiten nachfolgend anhand der Fig. 2 erläutert werden.

Die Nabendichtung umfaßt den bereits erwähnten starren Ring 10 und außerdem einen zweiteilig aufgebauten Dichtring 19, bestehend aus einem Innenring 20 und einem Außenring 21. Innenring 20 wie Außenring 21 bestehen jeweils aus einem im wesentlichen starren Trägerring 22 bzw. 23 aus Metall, welcher einen sich in Achsrichtung erstreckenden ersten Schenkel 24 bzw. 25 sowie einen sich radial erstreckenden zweiten Schenkel 26 bzw. 27 aufweist. Erster Schenkel 24 und zweiter Schenkel 26 bilden zusammen die Querschnittsform eines L. Gleiches gilt für den ersten Schenkel 25 und den zweiten Schenkel 27 des Außenrings 21.

Infolge der im Querschnitt L-förmigen Trägerringe sind Innenring 20 und Außenring 21 des zweiteiligen Dichtrings 19 so zueinander angeordnet, daß sich der Außenring 21 mit seinem radialen Schenkel 27 in die zwischen dem ersten Schenkel 24 und dem zweiten Schenkel 26 des Innenrings 20 gebildete Ecke hinein erstreckt, und dort über eine Schleifdichtung 28 anliegt. Umgekehrt erstreckt sich der Innenring 20 mit seinem radialen Schenkel 26 in die zwischen dem ersten Schenkel 25 und dem zweiten Schenkel 27 des Außenrings 21 gebildete Ecke hinein.

Der Innenring 20 stützt sich auf der zylindrischen Mantelfläche des Achskörpers 1 ab, steht also mit dem Achskörper still. Zur Verbesserung der Abdichtung befindet sich zwischen dem ersten Schenkel 24 des Innenrings 20 und dem Achskörper eine Elastomer-Unterlage 30, die einen lösbaren Sitz auf dem Achskörper sicherstellt.

Umgekehrt stützt sich der Außenring 21 des Dichtrings gegen die in diesen Bereich ebenfalls zylindrische Bohrung 15 der Radnabe 7 ab, und zwar ebenfalls über den ersten Schenkel 25 sowie eine zwischen diesem ersten Schenkel 25 und der Bohrung 15 angeordnete Elastomer-Unterlage 31. Der hierdurch erzeugte Reibschluß führt dazu, daß der Außenring 21 mit der Radnabe 7 umläuft.

Die Elastomer-Unterlagen 30, 31 sind an die jeweiligen metallischen Trägerringe 22 bzw. 23 anvulkanisiert, ebenso wie die nachfolgend im einzelnen beschriebenen Dichtungen, welche die eigentliche Abdichtung des Inneren der Naben-Wälzlagerung bewirken.

Die Hauptdichtflächen sind an der bereits erwähnten Schleifdichtung 28 angeformt. Die Schleifdichtung 28 ist am radial inneren Rand 32 des zweiten Schenkels 27 des Außenrings 21 durch Vulkanisieren befestigt. Bestandteile der Schleifdichtung 28 sind ein darin eingebetteter Federring, sowie zwei am Elastomer-Material der Schleifdichtung 28 angeformte Hauptdichtflächen 33, 34 bzw. Dichtlippen. Die Hauptdichtfläche 33 liegt elastisch an dem ersten Schenkel 24, und die Hauptdichtung 34 elastisch an dem zweiten Schenkel 26 des an dieser Stelle metallisch blanken Trägerrings 22 an. Beide Hauptdichtflächen 33, 34 befinden sich auf diese Weise auf einem relativ kleinen Durchmesser und damit auf einem geringeren Umfang der Nabendichtung. Auf diesem Umfang sind die Umfangsgeschwindigkeiten geringer als näher an der Innenseite der Nabe. Ferner befinden sich die Hauptdichtflächen 33, 34 auf diese Weise nicht dort, wo sich in der Praxis infolge der Zentrifugalkräfte das Lagerfett ansammelt, nämlich nahe der Wandung der Radnabe. Schließlich ist die Lage der Hauptdichtflächen 33, 34 auch in Bezug auf die in der Praxis starke Erwärmung der Radnabe 7 von Vorteil. An der Radnabe 7 ist üblicherweise die Bremstrommel oder die Bremsscheibe der Radbremse befestigt, weshalb die Radnabe 7 einer sehr hohen Temperaturbeanspruchung ausgesetzt ist. Durch die räumliche Verlagerung der Hauptdichtflächen möglichst weit nach innen, d. h. nahe an den Achskörper 1, sind diese daher einer geringen Temperaturbelastung ausgesetzt.

Sinnvoll ist es, Schmutz- und Staubpartikel gar nicht erst bis in den Bereich der Schleifdichtung 28 und damit in den Bereich der Hauptdichtflächen gelangen zu lassen. Zu diesem Zweck ist der Schleifdichtung 28 zur Nabenaußenseite hin eine Staub- und Schmutzdichtung 38 vorgeschaltet. Diese ist auf dem äußeren Rand des Trägerrings 22 des Innenrings 20 befestigt, vorzugsweise ebenfalls durch Vulkanisieren. Die Staub- und Schmutzdichtung 38 verfügt über eine sehr flexible Lippe, die sich von innen an dem Schenkel 25 des an dieser Stelle metallisch blanken Trägerrings 23 abstützt. Die Neigung dieser Lippe nach außen gewährleistet eine gute Abdichtung und verhindert, daß bei Unterdruck in der Naben-Wälzlagerung staubbeladene Luft dort hinein eindringen kann.

Schließlich ist der Nabendichtung noch eine Grobschmutzdichtung 40 vorgeschaltet. Diese ist bei 41 formschlüssig mit der Elastomer-Unterlage 30 verbunden, legt sich bei 42 an eine Schulter 43 an der Innenwandung der Radnabe 7 an, und schleift dort. Der Verschleiß ist zwar relativ hoch, jedoch ist dies angesichts des Charakters der Dichtung 40 als Grobschmutzdichtung weniger entscheidend.

Die Besonderheit der Radlagerung besteht darin, daß sich die Radnabe mittels des Dichtrings 19 sowie des weiteren Rings 10 komplett einschließlich der darin angeordneten Naben- Wälzlagerung von dem Achskörper 1 bzw. dessen Achsschenkel 2 abziehen läßt. Das Grundprinzip hierzu ist in der EP 0 407 719 B1 beschrieben.

Beim Abziehen wird die aus den Wälzlagern 5 und 6 zusammengesetzte Naben-Wälzlagerung durch den innen an der Radnabe 7 fixierten und als radialer Vorsprung dienenden Sicherungsring 16 hintergriffen. Hierzu läßt Fig. 2 erkennen, daß der Außendurchmesser des Innenrings 20 der Nabendichtung größer ist, als der Innendurchmesser des Vorsprungs 16. Zugleich ist der Innenring 20 mit dem Stirnseitenrand 45 seines ersten Schenkels 24 gegen die Außenseite 44 des starren Rings 10 abstützbar, ohne jedoch im Betrieb dauernd an dem Ring 10 anzuliegen. Beim Abziehen der Radnabe stützt sich daher der Sicherungsring 16 an dem Innenring 20 ab, dieser überträgt diese Kräfte indem er sich seinerseits axial gegen den Ring 10 abstützt, wodurch der Ring 10 die Axialkraft auf die Innenelemente der Wälzlagerung überträgt, und diese insgesamt mitgenommen wird. Auf diese Weise dient der Innenring 20 der Nabendichtung als Mitnehmer bei der Verwirklichung des beschriebenen Prinzips. Ist die Radnabe abgezogen, läßt sich nach Entfernen der Grobschmutzdichtung 40 und Lösen des Sicherungsrings 16 die Nabendichtung komplett, d. h. einschließlich des flachen Rings 10, aus der Radnabe 7 herausziehen, um schließlich an das Wälzlager 5 zu gelangen.

Figur 2 lässt erkennen, dass der Innenring des Dichtrings 19 formschlüssig mit dem weiteren Ring 10 verriegelt ist. Diese Verriegelung ist sowohl eine Drehverriegelung, wie auch eine axiales Spiel aufweisende Verriegelung gegenüber Zugkräften. Zu diesem Zweck weist der Schenkel 24 des Innenrings 20, über seinen Umfang betrachtet, mehrere Verlängerungen 46 auf, welche durch korrespondierende Öffnungen 47 des Ringes 10 hindurchgreifen. Die Verlängerungen 46 beginnen am äußeren Stirnseitenrand 45 des Schenkels 24, und sie weisen an ihren äußeren Enden 48 Querlaschen auf. Die Querlaschen lassen sich mittels eines geeigneten Werkzeuges verbiegen. Zur Montage der Dichtungseinheit werden daher die Verlängerungen 46 einschließlich ihrer Querlaschen durch die Öffnungen 47 hindurchgesteckt und die Enden 48 anschließend so verformt, dass eine dauerhafte axiale Verriegelung erreicht wird. Innenring 20 und weiterer Ring 10 lassen sich dann nicht mehr axial voneinander trennen, sie bilden vielmehr eine Dichtungseinheit. In diese Dichtungseinheit ist auch der Außenring 21 des Dichtrings einbezogen mit der Folge, dass die Ringe 20, 21, 10 einerseits durch Formschluss miteinander verbunden sind, und andererseits durch ineinander Verschachteln. Die Verschachtelung beruht vor allem darauf, dass der Außenring 21 mit seinem zweiten Schenkel 27 in den Ringraum zwischen zweitem Schenkel 26 des Innenrings 20 und dem weiteren Ring 10 ragt. Bei der Montage der Nabendichtung kann daher die gesamte Dichtungseinheit bestehend aus Innenring 20, Außenring 21 und weiterem Ring 10 komplett und als z.B. Verschleißteil in die Radnabe eingesetzt werden.

### Bezugszeichenliste

- 1: Achskörper
- 2: Achsschenkel
- 3: Lagersitz
- 4: Lagersitz
- 5: inneres Wälzlager
- 6: äußeres Wälzlager
- 7: Radnabe
- 8: Stufe im Achskörper
- 10: Ring
- 11: Außenrand
- 15: Bohrung
- 16: Vorsprung, Sicherungsring
- 19: Dichtring
- 20: Innenring
- 21: Außenring
- 22: Trägerring
- 23: Trägerring
- 24: erster Schenkel des Innenrings
- 25: erster Schenkel des Außenrings
- 26: zweiter Schenkel des Innenrings
- 27: zweiter Schenkel des Außenrings
- 28: Schleifdichtung
- 30: Elastomer-Unterlage
- 31: Elastomer-Unterlage
- 32: Rand
- 33: erste Hauptdichtfläche
- 34: zweite Hauptdichtfläche
- 38: Staub- und Schmutzdichtung
- 40: Grobschmutzdichtung
- 41: Verbindung
- 42: Anlageort
- 43: Schulter
- 44: Außenseite
- 45: Stirnseitenrand
- 46: Verlängerung
- 47: Öffnung
- 48: Ende

## Patentansprüche

1. Dichtungseinheit für eine Nabendichtung, welche sich aus einem aus einem Innenring (20) und einem Außenring (21) zweiteilig aufgebauten Dichtring (19) sowie einem zusätzlichen Ring (10) zusammensetzt,
**dadurch gekennzeichnet,**
**dass** der Innenring (20) und der zusätzliche Ring (10) formschlüssig miteinander drehverriegelt sind, und dass die Ringe (20, 21, 10) in axialer Richtung durch Formschluss und Verschachteln nicht trennbar miteinander verbunden sind.

2. Dichtungseinheit nach Anspruch 1, **dadurch gekennzeichnet, dass** ein gegen den zusätzlichen Ring (10) abstützbarer Schenkel (24) des Dichtrings (19) ein oder mehrere partielle Verlängerungen (46) aufweist, welche durch korrespondierende Öffnungen (47) des zusätzlichen Rings (10) hindurchgreifen.

3. Dichtungseinheit nach Anspruch 2, **dadurch gekennzeichnet, dass** die Verlängerungen (46) an ihren Enden (48) derart verformbar sind, dass der zusätzliche Ring (10) in Zugrichtung gegen den Dichtring (19) gesperrt ist.

## Claims

1. Sealing unit for a hub seal, which is composed of a sealing ring (19) and an additional ring (10), said sealing ring being formed in two parts from an inner ring (20) and an outer ring (21), **characterised in that** the inner ring (20) and the additional ring (10) are locked to one another by a form fit so as to rotate with one another, and **in that** the rings (20, 21, 10) are inseparably connected to one another in the axial direction by a form fit and by nesting.

2. Sealing unit according to claim 1, **characterised in that** a leg (24) of the sealing ring (19), which leg can be supported against the additional ring (10), has one or more partial extensions (46) which pass through corresponding openings (47) of the additional ring (10).

3. Sealing unit according to claim 2, **characterised in that** the extensions (46) are deformable at their ends (48) in such a way that the additional ring (10) is locked against the sealing ring (19) in the pulling direction.

## Revendications

1. Dispositif d'étanchéité pour un joint de moyeu, lequel dispositif est formé par une bague d'étanchéité (19), réalisée en deux parties avec une bague intérieure (20) et une bague extérieure (21), ainsi que par une bague supplémentaire (10),
**caractérisé en ce que** la bague intérieure (20) et la bague supplémentaire (10) sont assemblées l'une à l'autre par conjugaison de forme de manière immobile en rotation, et **en ce que** les bagues (20, 21, 10) sont assemblées entre elles par conjugaison de forme et par emboîtement de manière non séparable dans la direction axiale.

2. Dispositif d'étanchéité selon la revendication 1, **caractérisé en ce qu'**une branche (24) de la bague d'étanchéité (19), laquelle peut venir en appui contre la bague supplémentaire (10), comporte un ou plusieurs prolongements (46) partiels, qui passent à travers des orifices (47) correspondants dans la bague supplémentaire (10).

3. Dispositif d'étanchéité selon la revendication 2, **caractérisé en ce que** les prolongements (46) sont déformables au niveau de leurs extrémités (48), de telle sorte que la bague supplémentaire (10) est bloquée dans la direction de traction contre la bague d'étanchéité (19).
